Europäisches Patentamt

European Patent Office

Office européen des brevets

(11) Veröffentlichungsnummer: **0 250 616 B1**

(12) **EUROPÄISCHE PATENTSCHRIFT**

(45) Veröffentlichungstag der Patentschrift:
04.04.90

(21) Anmeldenummer: 86108654.4

(22) Anmeldetag: 25.06.86

(51) Int. Cl.⁴: **C09F 7/02, C01F 7/36**

(54) Verfahren zur Herstellung kugelförmiger alpha-aluminium-oxidteilchen, Aluminiumoxidteilchen und deren Verwendung.

(43) Veröffentlichungstag der Anmeldung:
07.01.88 Patentblatt 88/1

(45) Bekanntmachung des Hinweises auf die Patenterteilung:
04.04.90 Patentblatt 90/14

(84) Benannte Vertragsstaaten:
DE FR GB

(56) Entgegenhaltungen:
EP-A- 0 117 755

DISSERTATION ABSTRACTS INTERNATIONAL, Band 43, Nr. 4, Oktober 1982, Seite 1115-B; "Formation of mixed metal oxides by chemical reactions in aerosols", & INGEBRETHSEN, BRADLEY JAMES, PH.D. CLARKSON COLLEGE OF TECHNOLOGY, 1982, Seite 165
CHEMICAL ABSTRACTS, Band 93, 1980, Seite 576, Zusammenfassung Nr. 80855r, Columbus, Ohio, US; B.J. INGEBRETHSEN et al.: "Preparation of uniform colloidal dispersions by chemical reactions in aerosols. 2. Spherical particles of aluminum hydrous oxide", & J. AEROSOL SCI. 1980, 11(3), 271-80UK
BELORUSS. SSR 1965, 76-83 000
WORLD SURFACE COATINGS ABSTRACTS, Band 59, Nr. 528, Juni 1986, Seite 812, Oxford, GB; & JP-A-60 103 024

(73) Patentinhaber: IBM DEUTSCHLAND GMBH, Pascalstrasse 100, D-7000 Stuttgart 80(DE)
(84) Benannte Vertragsstaaten: DE

(73) Patentinhaber: International Business Machines Corporation, Old Orchard Road, Armonk, N.Y. 10504(US)
(84) Benannte Vertragsstaaten: FR GB

(72) Erfinder: Trippel, G., Dr., Steinenbronnerstrasse 15, D-7032 Sindelfingen(DE)
Erfinder: Steiner, W., Dipl.-Ing. (FH), Zeisgweg 17/1, D-7030 Böblingen(DE)
Erfinder: Joppien, G., Prof.Dr., Alsbacherstrasse 46, D-6101 Bickenbach(DE)
Erfinder: Hofmann, U., Dipl.-Ing., Justus-Liebigstrasse 5, D-6080 Gross-Gerau(DE)

(74) Vertreter: Eitle, Werner, Dipl.-Ing., Hoffmann, Eitle & Partner Patentanwälte Arabellastrasse 4, D-8000 München 81(DE)

## Beschreibung

Die Erfindung betrifft ein Verfahren zur Herstellung kugelförmiger Aluminiumoxidteilchen enger Teilchengrössenverteilung, wobei man ausgehend von einer flüchtigen hydrolysierbaren Aluminiumverbindung nahezu monodisperses aluminiumhaltiges Sol erzeugt, dieses zu Aluminiumhydroxidpartikeln hydrolysiert und sodann kalziniert. Die Erfindung bezieht sich weiter auf die kugelförmigen Aluminiumoxidteilchen und deren Verwendung.

Aus der EP-A 0 117 755 ist die Herstellung von Metalloxidteilchen, u.a. von Titanoxiden bekannt, die durch Kontaktierung von flüssigen Aerosolteilchen mit turbulenten Gasströmen unter Hydrolyse und nachfolgender Kalzinierung gewonnen werden. Die Herstellung von Aluminiumoxidpartikeln enger Teilchengrößenverteilung ist in der Literatur mehrfach beschrieben worden. In "World Surface Coatings Abstracts", Bd. 59 (1986) Nr. 528 ist die Herstellung von feinen alpha-Aluminiumoxidteilchen unter Verwendung hydrophober organischer Lösungsmittel unter Vermeidung von Vermahlungsstufen beschrieben. Hinweise auf bestimmte Teilchengrößen und einen bestimmten Ablauf der Kalzinierungsstufe fehlen.

Eine weitere Möglichkeit zur Herstellung von monodispersem, hydratisierten Aluminiumoxid beruht auf der thermisch erzwungenen Hydrolyse von Aluminiumsalzlösungen im sauren oder neutralen pH-Bereich. Gemäss einer solchen Ausfällungsmethodik (z.B. R. Brace und E. Matijevic, J. Inorg. Nucl. Chem. 35, pp. 3691, 1973) wird durch das langsame Erwärmen von Lösungsproben auf konstante Reaktionstemperatur ein homogener Fällungszustand erreicht, bei dem durch spontane Keimbildung und anschliessendes Keimwachstum monodisperse Teilchen unterschiedlicher geometrischer Formen entstehen. Nach einer Variante des Verfahrens geht man von gelöstem Aluminiumsulfat aus, das über mehrere Tage bei 98 ± 2°C erhitzt wird, bis sich durch Streulichtexperimente, Tyndall-Spektren oder andere Massnahmen die Existenz monodisperser Teilchen nachweisen lässt, die zu Kugeln von röntgenamorphem AlOOH aufgearbeitet werden können. Nachteilig an dieser Methodik sind lange Präparationszeiten (ca. 4 bis 6 Tage allein für die Fällungsphase) und oft nur geringe Ausbeuten.

Die Herstellung monodisperser Aluminiumoxidpartikel ist auch schon ausgehend von flüchtigen aluminiumorganischen Verbindungen in Aerosolgeneratoren beschrieben worden, in denen diese in monodisperse Aerosoltröpfchen übergeführt werden. Gemäss Ingebrethsen und Matijevic (J. Aerosol Sci., Bd. 11, pp. 271, 1980) lassen sich gleichförmige Aerosole von hydratisiertem alpha-Aluminiumoxid durch die Hydrolyse von Aluminium-sec-butoxid-Tröpfchen in einem sogenannten Falling-Film-Generator erreichen. Dieser im Betrieb relativ aufwendige Generator arbeitet nach dem Prinzip, dass Fremdkeime mit einem kontinuierlichen Trägergasstrom der gasförmigen metallorganischen Verbindung zugeführt werden und sodann eine Übersättigung durch Abkühlung herbeigeführt wird. Nach dieser Methodik durchströmt ein die Keime enthaltender Trägergasstrom eine Glassäule, an deren temperierter Innenwand die gewählte aluminiumorganische Verbindung als dünner Flüssigkeitsfilm herabfliesst. Durch langsame Verdampfung erfolgt die Beladung des Gasstroms, ohne dass turbulente Durchmischung sich nachteilig auf den Stofftransport beim Keimwachstum in der Abkühlungszone auswirken kann. Die durch Ingebrethsen und Matijevic hergestellten Teilchen des wasserhaltigen Aluminiumoxidsols wiesen einen Tröpfchendurchmesser von 0,42 μm und die hieraus erhaltenen festen Kugeln aus gamma-Aluminiumoxid einen solchen von 0,18 μm auf.

Ein Verfahren zum Erhalt von alpha-Aluminiumoxidpartikeln submikroner Dimensionierung ist nicht angeführt.

Der vorliegenden Erfindung liegt die Aufgabe zugrunde, ein Verfahren zur Herstellung kugelförmiger Aluminiumoxidteilchen zu schaffen, das in effizienter Weise geeignet ist, diese mit enger Teilchengrössenverteilung in Kugelform in speziell gewählter Dimensionierung zu erzeugen. Des weiteren sollen einheitliche Aluminiumoxidteilchen in einer solchen Dimensionierung geschaffen werden, die deren Einbringung in Magnetschichten zur Erhöhung der Abriebsfestigkeit gegenüber dem Magnetkopf und zum Erhalt eines optimalen Signal-Rauschverhältnisses gestattet.

Diese Aufgabe wird durch die Schaffung eines Verfahrens zur Herstellung kugelförmiger Aluminiumoxidteilchen der eingangs genannten Art gelöst, das dadurch gekennzeichnet ist, dass das Sol durch einen Aerosolgenerator gebildet wird, wobei die Strömungsgeschwindigkeit des bzw. der Trägergase (s) und deren Temperatur, welche das Verhältnis der Konzentration der Keime und des zu kondensierenden aluminiumhaltigen Dampfes regeln, entsprechend der gewünschten Teilchengröße des Endprodukts eingestellt werden, daß das Sol in ein Hydrolysiermedium eingebracht wird, welches Wasser in kontrolliert niedrigem Anteil enthält und in welchem sich das Sol nicht auflöst, sondern eine Emulsion bildet, welche dann mit fortschreitender Hydrolyse in eine Suspension überführt wird und daß zum Kalzinieren unter Einhaltung eines Stufenprogramms auf eine Temperatur zwischen 1000°C und 1200°C erhitzt wird, wobei α-Aluminiumoxidteilchen einheitlicher Kugelform in submikroner Teilchengröße zwischen 0,05 und 2 μm sich bilden.

Nach einer Ausführungsform des erfindungsgemässen Verfahrens kann derart vorgegangen werden, dass das Sol durch einen Aerosolgenerator gebildet wird, in dem das Verhältnis der Konzentration der Keime und des zu kondensierenden aluminiumhaltigen Dampfes durch Regelung der Strömungsgeschwindigkeit des bzw. der Inertgases(s) und deren Temperatur derart eingestellt wird, dass das Sol nach Kontaktierung mit Wasser, das in dem Medium in kontrolliert niedrigem Anteil enthalten ist, und anschliessende Kalzinierung zu Aluminiumoxidteilchen einheitlicher Kugelform in submikroner Teilchengrösse oberhalb 0,2 μm übergeführt ist.

Als Aerosolgeneratoren finden die zur Herstellung monodisperser Aerosoltröpfchen bekannten grundsätzliche Anwendung. Im Rahmen der Erfindung kommen insbesondere der sogenannte Rapaport-Weinstock-Generator (Experientia 11, pp. 363, 1955), der Falling-Film-Generator (Ingebrethsen und Matijevic in J. Aerosol Sco., Vol. 11, pp. 271, 1980) sowie der Sinclair-La Mer-Generator (M. Kerker, Adv. Colloid Interface Sci. 5, pp. 105, 1975) in Betracht. Hierunter ist insbesondere der Sinclair-La Mer-Generator bevorzugt.

Zur Herstellung der gewünschten kugelförmigen Aluminiumoxidteilchen mit enger Teilchengrössenverteilung können flüchtige Aluminiumverbindungen, die hydrolysierbar sind, eingesetzt werden. Als solche sind insbesondere Aluminiumalkoholate günstig. Mit Vorzug kommen hierfür die Reaktionsprodukte mit Niedrig-Alkoholen, u.a. Ethylate, Propylate, Butylate sowie Pentylate in Betracht. Unter den Alkoholaten sind insbesondere die Butylate bevorzugt, z.B. Al-Isobutylat, Al-n-butylat und - besonders vorteilhaft - Al-tri-sec-butylat.

Die vorstehend angeführten Aluminiumverbindungen werden im Rahmen des erfindungsgemässen Verfahrens im allgemeinen erhitzt, zweckmässig im Bereich von 80 bis 250°C. Bei Wahl von Aluminiumbutylaten werden besonders günstige Ergebnisse bei Temperaturen im Bereich von 100 bis 200°C und insbesondere bei 130 bis 180°C erhalten.

In den Aerosolgeneratoren werden die Keime bzw. die gewählte Aluminiumverbindung mit Trägergasen gefördert. Hierfür kommen insbesondere Stickstoff, Argon oder Helium in Betracht, die vorteilhaft zuvor auf an sich bekannte Weise getrocknet werden.

Soweit im Rahmen des erfindungsgemässen Verfahrens der Rapaport-Weinstock-Generator Anwendung findet, (Einzelheiten zum genannten Generator lassen sich zum Beispiel entnehmen: A. Berner und 0. Preining, Septième colloque sur les poussières, L'Institut National de Recherche Clinique Appliquée, Paris, 1964, pp. 103) kann dieser in modifizierter Form, bestehend aus einer dreiteiligen Glasapparatur, nämlich dem Zerstäuberkolben mit aufgesetztem Kondensationsrohr (vorteilhaft als Zwiebelrohr ausgebildet), einer hierauf folgenden Heizzone und sodann dem Kondensationsschornstein (der eine zweite Heizzone beinhalten kann) zum Einsatz gelangen. In dem Zerstäuberkolben befindet sich die vorgelegte, zu hydrolysierende Aluminiumverbindung, die mittels getrocknetem Trägergas in den Zerstäuberraum einer in dem Zerstäuberkolben befindlichen Wirbelstromdüse (z.B. der Firma Schlick, Coburg) hineingesaugt wird. Das Trägergas wird vorzugsweise vor Eintritt in den Zerstäuberkolben bzw. die Düse, z.B. mit flüssigem Stickstoff, getrocknet. Der vom Zerstäuber erzeugte Aerosolnebel wird vom Trägergas in das aufgesetzte Kondensationsrohr übergeführt, an dessen Wandungen sich grössere Partikel abscheiden und über die Flüssigkeitsrinne abfliessen können. Der weiter aufsteigende Nebel wird in der ersten Heizzone verdampft, in der mit einem Thermoelement die gewünschte Verdampfungstemperatur kontrolliert eingestellt werden kann. Im Kondensationsschornstein erfolgt die Übersättigung des abkühlenden Dampfes unter kontinuierlicher Bildung monodisperser Aerosolteilchen.

Die gewünschten kugelförmigen Aluminiumoxidteilchen enger Teilchengrössenverteilung lassen sich im Rapaport-Weinstock-Generator beispielsweise ausgehend von Aluminiumalkoholat und insbesondere Aluminium-tri-sec-butylat herstellen, das vorzugsweise als niederprozentige Lösung in einem Trägermedium eingeführt wird. Als solche kann beispielsweise eine 10 %ige Lösung in Cyclohexan dienen. Die Temperatur der ersten und zweiten Heizzone wird vorteilhaft im Bereich von 160 bis 200°C, vorzugsweise 165 bis 180°C, eingestellt. Die gebildeten Aerosolnebel werden durch Einleiten des Gasstromes in Waschflaschen in Suspensionen übergeführt, wobei die Hydrolyse zu Aluminiumhydroxid erfolgt. Die Gaseinleitung kann jeweils so lange erfolgen, bis eine Trübung der Auffangflüssigkeit visuell beobachtbar ist (z.B. mit einem Tyndall-Spektrometer). Es wurde gefunden, dass die Bedingungen der Hydrolyse der erzeugten Aerosole in kritischer Weise kontrolliert werden sollten, wobei sich insbesondere inerte Trägermedien mit einem niedrigen, eingestellten Wassergehalt hierfür bewährt haben. Dies wird später im Zusammenhang mit anderen Aerosolgeneratoren in grösserem Detail beschrieben, worauf verwiesen wird.

Im Rahmen des erfindungsgemässen Verfahrens kann auch ein Falling-Film-Generator Anwendung finden, wie er beispielsweise durch Ingebrethsen und Matijevic in J. Aerosol, Sci. (Vol. 11, pp. 271, 1980) beschrieben ist. In diesem Generator werden die Fremdkeime mit einem kontinuierlichen Trägergasstrom der gasförmigen aluminiumorganischen Verbindung zugeführt, wonach sich eine Übersättigung durch Abkühlung anschliesst. In dem genannten Generator erfolgt die Mischung des Trägergasstroms mit dem Dampf in laminarer Weise, was dadurch erreicht wird, dass der die Keime enthaltene Trägergasstrom eine Glassäule durchströmt, an deren temperierter Innenwand die aluminiumorganische Verbindung als dünner Flüssigkeitsfilm herabfliesst. Durch langsame Verdampfung erfolgt die Beladung des Gasstromes, ohne dass turbulente Durchmischung sich nachteilig auf den Stofftransport beim Keimwachstum in der Abkühlungszone auswirken kann.

Der Generator kann mit den vorstehend genannten Trägergasen betrieben werden, beispielsweise mit getrocknetem Helium. Dieses wird in einen Ofen geführt, in dem es mit Kristallkeimen von verdampftem Silberchlorid beladen wird. Die Keimkonzentration kann durch die Ofentemperatur und die Trägergas-Strömungsgeschwindigkeit vorgegeben werden. In der thermostatisierten Falling-Film-Kammer strömt die aluminiumorganische Verbindung vom oberen zum unteren Flüssigkeitsreservoir, wobei sie als dünner Film an der Innenwandung des Verdampfungsrohrs entlang läuft. Mittels einer Pumpe wird der Kreislauf geschlossen. Der mit Flüssigkeitsdampf gesättigte Gasstrom passiert einen ersten Kühler, in dem das monodisperse Aerosol sich bildet. Aus der übersättigten Gasphase abgeschiedene spontane Keime, die das Präparationsergebnis verschlechtern würden, werden beim Durchfluss des Gasstroms durch die Heizzone wieder verdampft. In der Hydrolysekammer kann dann die Hydrolyse mit einem Inertmedium, dem eine kontrollierte Menge Wasser zugeführt ist, zu monodispersen Aluminiumhydroxidteilchen erfolgen. Diese Hydrolyse wird nachfolgend (im Zusammenhang mit dem Sinclair-La Mer-Generator) noch in weiterem Detail erörtert, worauf verwiesen wird.

Der Falling-Film-Generator kann mit Vorteil z.B. mit Bombenstickstoff als Trägergas betrieben werden, der nach Vortrocknung ein waagrecht angeordnetes Quarzrohr durchströmt, in dem sich ein mit festem Silberchlorid gefülltes Quarzschiffchen befindet. Das Aufheizen der Silberchloridprobe erfolgt durch einen Ofen. Dabei wird der Stickstoffstrom mit Kristallkeimen von AgCl beladen. Die aluminiumorganische Substanz wird in einer separaten Glasapparatur vorgeheizt und am unteren Reservoir in einem Vorratsgefäss aufgefangen. Nach der Vermischung des Trägergases mit dem Flüssigkeitsdampf wird sodann, wie vorerwähnt, im ersten Kühler an den AgCl-Keimen auskondensiert. Die Entstehung weisser Aerosolnebel ist gut beobachtbar. Diese werden dann in der nachfolgend erörterten Weise hydrolysiert und redispergiert.

Das erfindungsgemässe Verfahren kann unter Anwendung des Falling-Film-Generators mit guten Ergebnissen durchgeführt werden. Dabei wurde kugelförmiges alpha-Aluminiumoxid in einheitlicher Teilchengrösse erzielt, wenn die Ofentemperaturen zwischen etwa 600 und 650°C und die Falling-Film-Temperaturen bei 120 bis 180°C, vorteilhaft 130 bis 160°C, gehalten und in der nachfolgend angeführten Weise weiterverarbeitet wurde. Als Durchflussrate der inerten Trägergase, beispielsweise Stickstoff, können z.B. 1 bis 5 l/min gewählt werden.

In besonders günstiger Weise lassen sich aluminiumhaltige, hydrolisierbare monodisperse Aerosole mit dem Sinclair-La Mer-Aerosolgenerator erzeugen. Dieser wurde z.B. von Milton Kerker (Adv. Colloid Interface Sci. 5, 105, 1975) beschrieben und von anderen Autoren im Aufbau leicht modifiziert.

Das Grundprinzip der Arbeitsweise dieses Generators ist die Aerosolerzeugung durch Abkühlung eines erhitzten strömenden Gemisches von inertem Trägergas, Kondensationskeimen und kondensierbarem Flüssigkeitsdampf in einer geschlossenen Glasapparatur. Die Kondensationskeime bestehen vermutlich aus Metallpartikeln, die durch Funkenentladung zwischen zwei Metallelektroden in einer vom Trägergas durchströmten Funkeninduktionskammer erzeugt werden. An diesen Keimen erfolgt die Kondensation der Flüssigkeit beim langsamen Abkühlen durch Diffusion der Molekeln in der Dampfphase sehr gleichmässig.

Bei Anwendung des Sinclair-La Mer-Generators können die vorstehend angeführten Trägergase, vorteilhaft z. B. getrockneter Stickstoff, Einsatz finden. Die Temperatur im Boiler-Kolben und im Reheater-Kolben wird günstig im Bereich von 150 bis 200°C, vorzugsweise im Bereich von 160 bis 190°C und oft besonders günstig bei 170 bis 180°C gehalten. Besonders vorteilhaft ist es, wenn die Temperatur sowohl im Boiler als auch im Reheater im wesentlichen auf den gleichen Wert eingestellt wird.

Im Rahmen des erfindungsgemässen Verfahrens wird der Inertgasstrom durch die Ionisationskammer im allgemeinen mit höherer Strömungsgeschwindigkeit geführt als der Inertgasstrom, der durch bzw. über die aluminiumorganische Verbindung strömt. Dabei wird der Inertgasstrom vorzugsweise mit mindest doppelt höherer und besonders günstig vier- bis achtfach höherer Strömungsgeschwindigkeit durch die Ionisationskammer im Vergleich zu der Strömungsgeschwindigkeit des Inertgases, das die aluminiumorganische Verbindung aufnimmt, geführt.

Die Ionisationskammer ist mit Elektroden aus Schweissdraht versehen, die mit pulsierender Hochspannung beaufschlagt werden. Diese wird zweckmässig z.B. im Bereich von 5 bis 20 kV gewählt und kann mit Vorteil bei 8 bis 15 kV liegen. Durch die Höhe der gewählten Spannung kann die Zahl der abgegebenen Keime gesteuert werden.

Im Rahmen des erfindungsgemässen Verfahrens ist es nicht zwingend, bei Anwendung des Sinclair-La Mer-Aerosol-Generators die Keime über Schweissdrahtelektroden zu bilden. In alternativer Weise ist es möglich, die Keime analog wie bei Anwendung des Falling-Film-Generators durch erhitztes festes Halogenid - vorteilhaft AgCl, AgI oder NaCl - das sich zweckmässig auf einem Quarzschiffchen in einem beheizten Quarzrohr befinden kann, zu erzeugen. Die Keimkonzentration kann durch die Ofentemperatur und die Trägergasströmungsgeschwindigkeit entsprechend gewählt werden. Die Ofentemperatur kann ebenfalls nach Bedarf eingestellt werden. Günstige Verhältnisse wurden z.B. bei Einsatz von Ag-Halogeniden bei Temperaturen des beheizten Quarzrohrs im Bereich von 600 bis 650°C und besonders günstig bei 615 bis 635°C erhalten.

Der hydrolysierenden Nachbehandlung der durch die vorstehend genannten Aerosolgeneratoren erzeugten aluminiumhaltigen monodispersen Aerosole kommt besondere Bedeutung zu. Bei der Verwendung der vorstehend genannten Aluminiumorganyle, z.B. vorteilhaft der Aluminiumalkoholate, werden insbesondere dann monodisperse, kugelförmige Aluminiumhydroxidteilchen (und nach Kalzinierung $Al_2O_3$-Kugeln) erhalten, wenn das Hydrolysereagens eine nur langsam ablaufende Umwandlung der aluminiumorganischen Verbindung in Aluminiumhydroxid gewährleistet und sich andererseits die metallorganischen Flüssigkeitströpfchen im Hydrolysemedium selbst nicht auflösen. Vorzugsweise wird als Hydrolysemedium ein Inertmedium in Form einer Flüssigkeit eingesetzt, dem ein Wasseranteil in einer Menge unter 5 Gew.% zugefügt ist. Grundsätzlich können jedoch auch inerte Gase mit einem kontrollierten, niedrigen Anteil an Wasser eingesetzt werden, welcher Einsatz aber weniger vorteilhaft ist. Als Flüssigkeit dient mit Vorzug ein organisches Medium mit einem Wassergehalt unter 2 %. Jedoch auch andere Flüssigkeiten, z.B. Siliconöle mit ähnlich niedrigem Wassergehalt, können eingesetzt werden. Die günstigsten Ergebnisse wurden im Rahmen des erfindungsgemässen Verfahrens dann erzielt, wenn die Hydrolyse mit niedrigen Alkoholen, z.B. mit einer Kettenlänge von $C_1-C_5$, durchgeführt wurde, deren Wassergehalt unter 2 Gew.%, vorzugsweise unter 0,5 Gew.% und besonders günstig unter 0,1 Gew.% lag. Als solche Alkohole können mit besonderem Vorteil Methanol, jedoch auch Ethanol etc. genannt werden, wobei die Verwendung von Methanol sich als besonders günstig erwiesen hat.

Im Rahmen des erfindungsgemässen Verfahrens hat es sich als günstig erwiesen, dass das Sol mit dem den Wasseranteil enthaltenden Trägermedium in eine Emulsion übergeführt wird. Diese Emulsion geht mit fortschreitender Hydrolyse in eine Suspension über. Die Möglichkeit der Emulsionsbildung ist überraschend, da angenommen werden musste, dass sich die Aerosoltröpfchen bei Wahl von z.B. niedrigem Alkohol mit kontrolliertem Wassergehalt hierin auflösen würden. Es wird angenommen, dass die Art der Hydrolyse und vorteilhaft auch hierbei die Emulsionsausbildung wesentlich dazu beitragen, dass alpha-Aluminiumoxid in Kugelform in gezielter, einheitlicher geringer Teilchengrösse erhältlich ist.

Nach der Hydrolyse des Aerosols, z.B. mit Methanol mit einem Wassergehalt zwischen 0,05 und 1 Gew.%, kann die (über die Zwischenstufe einer Emulsion gebildete) methanolische Suspension von Aluminiumhydroxid durch mehrfaches Zentrifugieren, Dekantieren der überstehenden Lösung vom Bodenkörper und Redispergierung des gewonnenen Feststoffes in weiterem Hydrolysemedium, z.B. frischem Methanol, weiter verarbeitet werden.

Auch der durch die durchgeführten Waschvorgänge des durch die kontrollierte Hydrolyse gebildeten Aluminiumhydroxids erfolgenden Befreiung organischen Verunreinigungen kommt Bedeutung zu. Dabei wird zweckmässig mit niedrigem Alkohol mehrfach gewaschen und jeweils zentrifugiert. Dies kann insbesondere mit Methanol bis zu 10 mal erfolgen, wobei die günstigsten Ergebnisse erzielt werden, wenn die Nachwaschvorgänge 5- bis 10-fach unter jeweiliger Abzentrifugierung und Dekantierung vorgenommen werden. Hiernach kann sich die Trocknung anschliessen.

Das Aluminiumhydroxid kann als solches aufbewahrt oder nach Trocknung durch langsames Aufheizen unter Phasenumwandlung kalziniert werden. Dabei entsteht alpha-Aluminiumoxidkorund. Im allgemeinen geht der Kalzinierung eine Trocknung, vorteilhaft bei Raumtemperatur bis 80°C, z.B. besonders günstig bei 30 bis 70°C, voraus. Die Phasenumwandlung kann dann, z.B. in einem Rohrofen, erfolgen, wobei es sich als günstig erwiesen hat, wenn das Aufheizen langsam vorgenommen wird.

Dabei ist es besonders günstig, daß die Erhitzung stufenweise, z.B. auf Temperaturen im Bereich von 150 bis 250°C, 300 bis 500°C und sodann auf Temperaturen zwischen 1000 und 1200°C, z.B. 1150°C, vorgenommen wird. Um die Phasenumwandlung zu begünstigen kann das Produkt z.B. im vorgenannten Bereich der jeweiligen Temperaturen, für eine gewisse Zeit, vorteilhaft 30 bis 60 Minuten, gehalten werden, bevor die langsame Temperatursteigerung, z.B. im Zeitraum von 3 bis 5 Stunden, auf die gewählte Endtemperatur, z.B. 1150 bis 1200°C erfolgt, bei der das Produkt dann ebenfalls zwischen 30 Minuten und mehreren Stunden gehalten werden kann.

Nach einer Ausführungsform des erfindungsgemässen Verfahrens wird die Trocknung und nachfolgende Kalzinierung derart vorgenommen, dass vor dem Kalzinieren bei etwa 60°C ungefähr 10 Stunden getrocknet wird und dass beim Kalzinieren zunächst auf ungefähr 200°C erhitzt und diese Temperatur ungefähr 30 Minuten konstant gehalten wird, daraufhin auf etwa 400°C erhitzt und diese Temperatur ungefähr 30 Minuten konstant gehalten wird, anschliessend auf etwa 1200°C erhitzt und diese Temperatur ungefähr 1,5 Stunden konstant gehalten wird und schliesslich abgekühlt wird.

Bei einer besonders vorteilhaften Variante des erfindungsgemässen Verfahrens wird Aluminiumbutylat, insbesondere Aluminium-sec-butylat, das bei Temperaturen im Bereich von 100 bis 200°C gehalten ist, im Sinclair-La Mer-Generator bei Temperaturen von Boiler und Reheater im Bereich von 160 bis 180°C mit getrocknetem Stickstoff als Trägergas bei einem Verhältnis der Strömungsgeschwindigkeiten des Inertgases durch die Ionisationskammer (die mit pulsierender Hochspannung im Bereich von 5 bis 20 kV beaufschlagt ist) sowie direkt in den Boiler von (4 bis 8) : 1 in monodisperses Aerosol übergeführt, dieses mit Methanol eines Wassergehaltes von 0,05 bis 0,3 Gew.% zu Al-Hydroxid hydrolisiert und sodann zur Umwandlung in alpha-Al$_2$O$_3$-Teilchen kalziniert.

Mit der Durchführung des erfindungsgemässen Verfahrens können kugelförmige quasi monodisperse Aluminiumoxidpartikel in alpha-Korund-Modifikation gewonnen werden, die ausschliesslich in Kugelform im Bereich von 0,05 bis 2 µm, vorteilhaft bei 0,2 bis 1 µm, und insbesondere in einem Bereich von 0,25 bis 0,6 µm vorliegen, wobei in diesen Bereichen nur ein Maximum der Teilchengrösse gegeben ist. Die erfindungsgemässen Aluminiumoxidpartikel in Kugelform können nach den bevorzugten Varianten des erfindungsgemässen Verfahrens insbesondere in einheitlicher Teilchengrösse mit einem breiten, symmetrischen Maximum bei 0,3 µm erzeugt werden. Derartige Aluminiumoxidpartikel können mit Vorteil zur Herstellung von Magnetschichten mit verbesserter Abriebsfestigkeit gegenüber Magnetköpfen sowie zur Verbesserung des Signal-Rauschverhältnisses eingesetzt werden.

Zum besseren Verständnis der Erfindung wird diese nachstehend in den Figuren und einem Ausführungsbeispiel weiter erläutert. Es zeigen

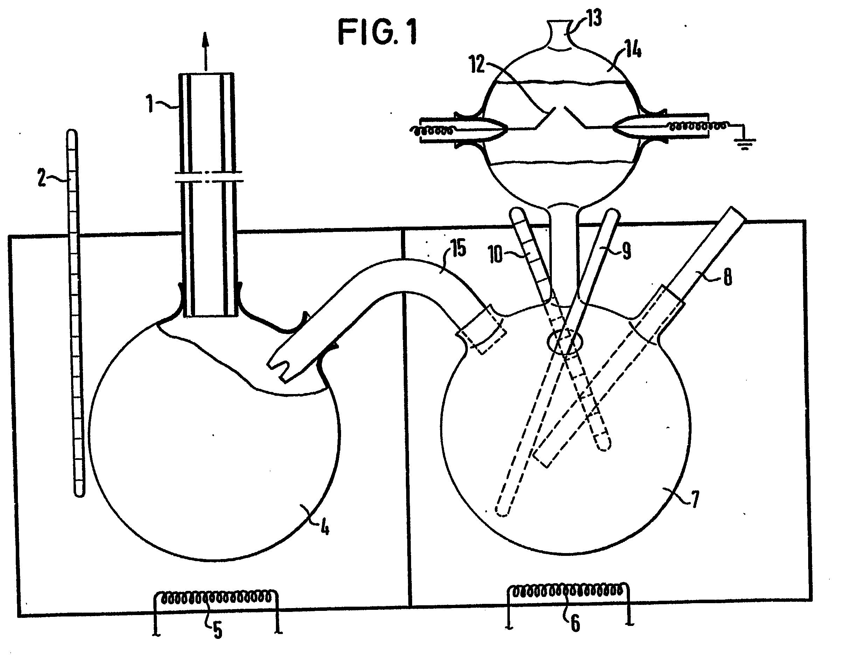

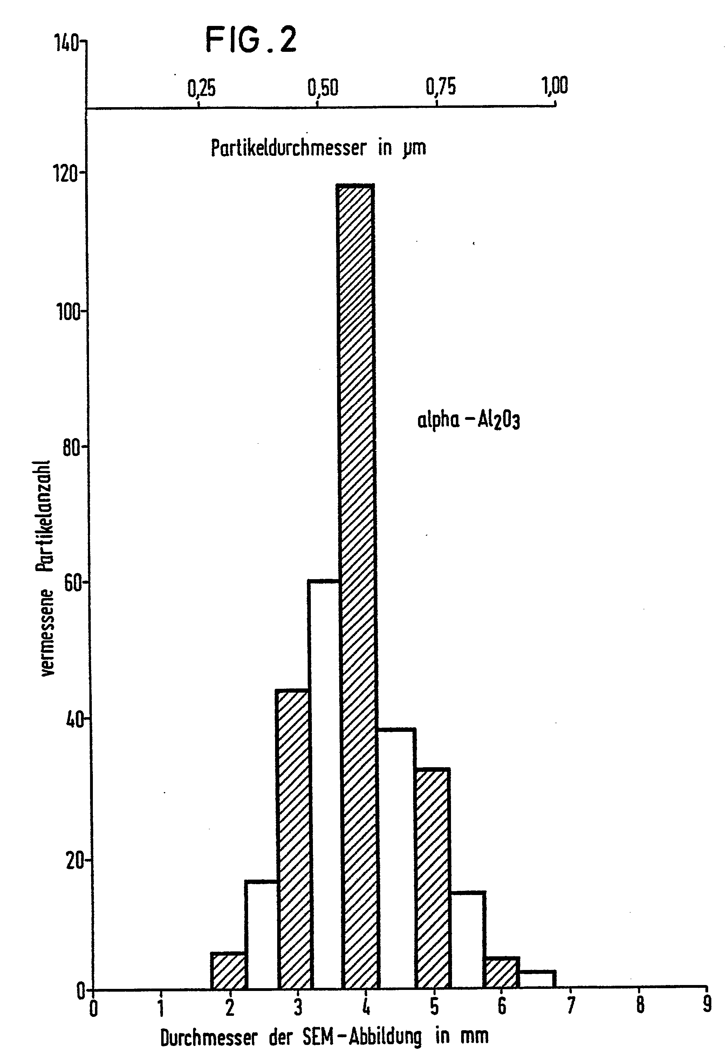

Fig. 1 den eingesetzten Sinclair-La Mer-Generator

Fig. 2 die Teilchengrössenverteilung von erfindungsgemäss hergestelltem alpha-Al$_2$O$_3$-Korund sowie

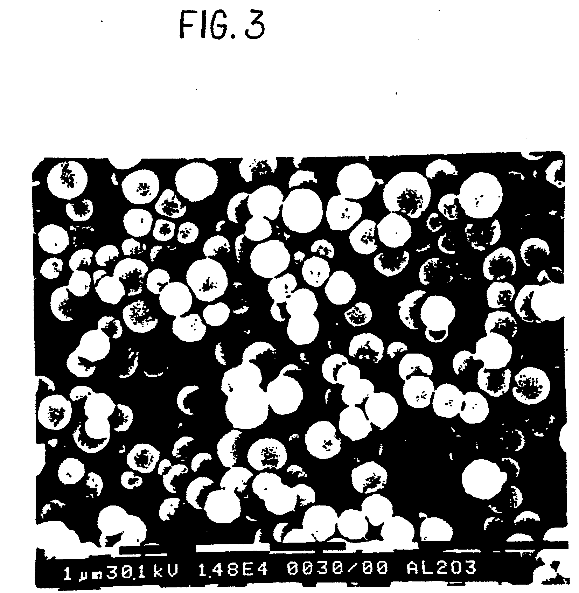

Fig. 3 eine REM-Aufnahme von alpha-Al$_2$O$_3$-Korund-Partikeln in Kugelform

Nachstehend wird der Sinclair-La Mer-Generator, wie er im Rahmen der vorliegenden Erfindung vorteilhaft zum Einsatz gelangen kann, kurz beschrieben:

In einer ersten Heizzone 6 befindet sich ein Mehrhals-Rundkolben 7 ("Boiler"), auf dem eine Ionisationskammer 14 aufgesetzt ist. Durch den Gaseinlass 13 der Ionisationskammer eintretendes Inertgas wird von den Elektroden 12 mit Keimen versehen und tritt in den Rundkolben 7 ("Boiler") ein. Durch einen weiteren Gaseinlass 8 kann direkt inertes Trägergas in den Kolben 7 eingeführt werden. Die Temperaturen innerhalb des Kolbens 7 werden durch ein Kontaktthermometer 9 sowie das Thermometer 10 überwacht. Der Kolben 7 ist durch ein Überleitrohr 15, das an seinem Ende in Düsen ausgezogen ist, mit einem zweiten Kolben 4 ("Reheater") verbunden. Der Kolben 4 befindet sich in einer zweiten Heizzone 5, deren Temperatur durch das Thermometer 2 überwacht wird. Auf dem Kolben 4 ist ein doppelwandiges Kühlrohr 1 aufgesetzt, durch das entstehendes Aerosol abgeführt werden kann.

Die Erfindung wird in den nachfolgenden Ausführungsbeispielen, die Ausführungsformen darstellen, weiter erläutert, die jedoch nicht einschränkend verstanden werden sollen.

AUSFÜRHUNGSBEISPIEL 1

Es wurde Aluminium-tri-sec-butylat $C_{12}H_{27}AlO_3$ in einem 2 l Mehrhals-Rundkolben ("Boiler") vorgelegt, der auf einer Temperatur von 170°C gehalten wurde. Durch die Ionisationskammer, deren Elektroden auf 10 kV pulsierender Hochspannung gehalten waren, wurde getrockneter Stickstoff mit einer Strömungsgeschwindigkeit von 11 l/min geleitet. Ein weiterer Stickstoffstrom von 2 l/min wurde über ein zur Spitze ausgezogenes Glasrohr direkt in die auf 170°C erhitzte aluminiumorganische Verbindung geführt, wodurch eine gleichmässige Verdampfung dieser aluminiumorganischen Verbindung eintrat. Durch das Überleitrohr wurde das kondensierbare Gemisch in den Reheater-Kolben (2 l Rundkolben) gerissen, der ebenfalls auf einer Temperatur von 170°C gehalten war. Die Temperierung beider Kolben erfolgte mittels eines aus zwei getrennten Kammern bestehenden elektrischen Ofens mit Temperaturregelung über Kontaktthermometer. Das hierdurch gebildete Gasgemisch wurde durch den auf dem Reheater befindlichen Kühlschornstein (ein ca. 2 m langes, senkrecht aufsteigendes Glasrohr) geführt, in dem durch langsame Abkühlung des aufsteigenden Kondensationsgemisches die Ausbildung der Aerosolpartikel erfolgte. Der aus dem Generator austretende Aerosolstrom wurde durch eine Glaskühlfalle geleitet, die mittels Schlauchverbindung mit dem Aerosolgenerator verbunden war und sich in einem Eisbad befand. Hierdurch wurde gasförmiges Aluminium-tri-sec-butylat an den Innenwänden der Kühlfalle abgeschieden und damit eine Kontamination der Aerosolpartikel in Suspension vermieden. Der Aerosolstrom wurde anschliessend in Glas-Waschflaschen von ca. 250 ml Volumen mit geraden Glas-Einleitungsrohren ohne Fritten geleitet, die ca. bis zur Hälfte ihres Rauminhalts mit Methanol eines Wassergehalts von 0,05 % gefüllt waren. Beim blasenförmigen Eintreten des Aerosolstroms in das Methanol bildete sich eine weisse Suspension aus. Durch das Hintereinanderschalten von fünf Waschflaschen wurde sichergestellt, dass die gesamten Aerosolpartikel hydrolisiert wurden. Die erhaltenen Suspensionen wurden in 250 ml Zentrifugengläsern aus Kunststoff mit Schraubdeckeln gefüllt und in einer MSE-Ultrazentrifuge bei 9000 U/min 1 Stunde zentrifügiert. Der Feststoff befand sich dänach fäst völlständig am Boden der Zentrifugengefässe. Mit einem zur Kapillare ausgezogenen Glasrohr und einer Wasserstrahlpumpe wurde die überstehende methanolische Lösung und mit ihr ein erheblicher Teil der in der Schwebe gebliebenen Verunreinigungsanteile vorsichtig abgesaugt. Danach wurde der Bodenkörper mit frischem Methanol versetzt und darin durch mechanisches Rühren redispergiert. Diese Behandlung wurde zehnfach hintereinander durchgeführt.

Der hierdurch gewonnene Bodenkörper wurde bei 60°C getrocknet und sodann im Rohrofen in einem Quarzschiffchen durch langsames stufenweises Aufheizen auf 200°C innerhalb von 1 Stunde unter Beibehaltung dieser Temperatur während eines Zeitraums von 30 Minuten, sodann Temperatursteigerung auf 400°C im Zeitraum von etwa 1 Stunde unter Beibehaltung dieser Temperatur für 30 Minuten und sodann Temperatursteigerung auf 1150°C im Zeitraum von 3 Stunden unter Beibehaltung der Endtemperatur während eines Zeitraums von 60 Minuten in alpha-$Al_2O_3$-Korund übergeführt. Die Teilchen lagen ausschliesslich in Kugelform vor und wiesen eine Teilchengrösse mit einem breiten symmetrischen Maximum der Partikeldurchmessergrösse bei 0,3 μm auf.

AUSFÜHRUNGSBEISPIEL 2

Ein weiteres bevorzugtes Verfahren zur Herstellung von quasi-monodispersen Aerosoltröpfchen des Aluminium-tri-sec-butylats $C_{12}H_{27}AlO_3$ bestand in der Beladung eines Inertgasstroms, vorzugsweise von Helium oder Stickstoff, mit Fremdkeimen aus Silberchlorid AgCl, der Kondensation der gasförmigen aluminiumorganischen Verbindung an diesen Keimen in einem Falling-Film-Generator und der Umwandlung von polydispersen zu quasi-monodispersen Tröpfchen durch nochmaliges Verdampfen und kontrollierte Kondensation.

Zu diesem Zweck wurde Inertgas aus einer Druckflasche entnommen und durch ein Gas-Reduzierventil nahezu auf Atmospärendruck entspannt. Ein im Reduzierventil integriertes Nadelventil erlaubte die Einregulierung einer gleichförmigen Gas-Strömungsgeschwindigkeit, die mittels eines vom Gas durchströmten Aerometers auf 1000 oder 2000 ml/min. konstant eingestellt wurde. Anschliessendes Hindurchleiten des Inertgasstroms durch ein Millipore-Filter mit 0,25 μm Porenweite und durch eine auf -196°C gekühlte Gas-Kühlfalle diente der Entfernung von Staubteilchen und Feuchtigkeitsspuren. Danach durchströmte das Gas den Keimgenerator, ein in einem Rohrofen von 30 cm Länge waagerecht zentriertes und auf 650°C aufgeheiztes Quarzrohr, in dessen Mitte sich ein mit Silberchlorid beschicktes Quarzschiffchen befand. Durch Verdampfung des Silberchlorids und anschliessende Kondensation beim Abkühlen ausserhalb des Ofens wurde der Inertgasstrom mit AgCl-Kondensationskeimen beladen. Er trat dann von oben in den Falling-Film-Generator ein, eine senkrecht angeordnete Glasapparatur, bestehend aus Falling-Film-Teil, erster Kondensationszone, Aufheizteil und zweiter Kondensationszone. Im Falling-Film-Teil, einem doppelwandigen Glasrohr, erfolgte die Verdampfung der aluminiumorganischen Verbindung, während diese als dünner Film von einem oberen Reservoir an den Innenwandungen des Rohrs zu einem unteren Reservoir floss und mittels Pumpe zum oberen Reservoir im Kreislauf zurückgeführt wurde. Durch die Ummantelung wurde auf 170°C thermostatisiertes Siliconöl im Kreislauf geführt. Der mit der aluminiumorganischen Verbindung beladene Gasstrom trat danach in die erste Kondensationszone ein, in der die Abkühlung des laminaren Gasstroms zur Übersättigung des Dampfes der aluminiumorganischen Verbindung und damit zur Kondensation in Form von Aerosoltröpfchen an den AgCl-Keimen führte. Da diese Aerosoltröpfchen nach der Literatur noch polydispers sind, erfolgte in der Heizzone bei 170°C erneute Verdampfung mit nachfolgender Kondensation zu quasi-monodispersen Aerosoltröpfchen in der zweiten Kondensationszone.

(Der eingesetzte Falling-Film-Generator hatte zu Experimentierzwecken eine zweite Heizzone, eine dritte Kühlzone und eine Hydrolysekammer, die aber beim erfindungsgemässen Verfahren vom Aerosolstrom nur bei Raumtemperatur durchströmt wurden.)

Die Hydrolyse der Aerosoltröpfchen zu Aluminiumhydroxid erfolgte wie im Ausführungsbeispiel 1 durch Hindurchleiten des Aerosolstroms durch Glas-Waschflaschen gefüllt mit feuchtem Methanol, wobei zunächst eine Emulsion, dann eine Aluminiumhydroxid-Suspension gebildet wurde. Nach Reinigung, Trocknung und stufenweiser Kalzinierung gemäss den Angaben in Ausführungsbeispiel 1 wurden alpha-Aluminiumoxid-Partikel mit Kugelform, enger Teilchengrössenverteilung und einem Maximum der näherungsweise Gauss'schen Verteilungskurve bei 0,45 μm erhalten.

**Patentansprüche**

1. Verfahren zur Herstellung kugelförmiger Aluminiumoxidteilchen enger Teilchengrößenverteilung, wobei man ausgehend von einer flüchtigen hydrolysierbaren Aluminiumverbindung nahezu monodisperses aluminiumhaltiges Sol in einem Trägergasstrom erzeugt, dieses zu Aluminiumhydroxidpartikeln hydrolysiert und sodann kalziniert, dadurch gekennzeichnet, daß das Sol durch einen Aerosolgenerator gebildet wird, wobei die Strömungsgeschwindigkeit des bzw. der Trägergase (s) und deren Temperatur, welche das Verhältnis der Konzentration der Keime und des zu kondensierenden aluminiumhaltigen Dampfes regeln, entsprechend der gewünschten Teilchengröße des Endprodukts eingestellt werden, daß das Sol in ein Hydrolysiermedium eingebracht wird, welches Wasser in kontrolliert niedrigem Anteil enthält und in welchem sich das Sol nicht auflöst, sondern eine Emulsion bildet, welche dann mit fortschreitender Hydrolyse in eine Suspension überführt wird und daß zum Kalzinieren unter Einhaltung eines Stufenprogramms auf eine Temperatur zwischen 1000°C und 1200°C erhitzt

wird, wobei α-Aluminiumoxidteilchen einheitlicher Kugelform in submikroner Teilchengröße zwischen 0,05 und 2 μm sich bilden.

2. Verfahren nach Anspruch 1, dadurch **gekennzeichnet**, dass das Sol durch einen Aerosolgenerator gebildet wird, in dem das Verhältnis der Konzentration der Keime und des zu kondensierenden aluminiumhaltigen Dampfes durch Regelung der Strömungsgeschwindigkeit des bzw. der Inertgase(s) und deren Temperatur derart eingestellt wird, dass das Sol nach Kontaktierung mit Wasser, das in dem Trägermedium in kontrolliert niedrigem Anteil enthalten ist, und anschliessende Kalzinierung zu Aluminiumoxidteilchen einheitlicher Kugelform in submikroner Teilchengrösse oberhalb 0,2 μm übergeführt ist.

3. Verfahren nach Anspruch 1 oder 2, dadurch **gekennzeichnet**, dass das Sol mit dem zugeführten Wasser in eine Emulsion übergeführt wird.

4. Verfahren nach Anspruch 1, dadurch **gekennzeichnet**, dass als Aerosolgenerator ein Sinclair-La Mer-Generator oder ein Falling-Film-Generator eingesetzt wird.

5. Verfahren nach Anspruch 1 oder 2, dadurch **gekennzeichnet**, dass als hydrolysierbare Aluminiumverbindung Aluminiumalkoholat Al(OR)₃ verwendet wird, wobei R unter Methyl, Ethyl, Propyl, Butyl und Pentyl ausgewählt ist.

6. Verfahren nach Anspruch 1, dadurch **gekennzeichnet**, dass als Trägergas N₂, Argon oder Helium im getrockneten Zustand verwendet wird.

7. Verfahren nach Anspruch 4, dadurch **gekennzeichnet**, dass die Temperatur des Sinclair-La Mer-Generators im Boiler und Reheater im Bereich von 150 bis 200°C jeweils gehalten wird.

8. Verfahren nach Anspruch 7, dadurch **gekennzeichnet**, dass die Temperatur im Boiler und Reheater im wesentlichen gleich eingestellt wird.

9. Verfahren nach Anspruch 7, dadurch **gekennzeichnet**, dass der Inertgasstrom durch die Ionisationskammer mit vier- bis achtfach höherer Strömungsgeschwindigkeit als durch bzw. über die hydrolysierbare Aluminiumverbindung geführt wird.

10. Verfahren nach Anspruch 4, dadurch **gekennzeichnet**, dass die Keimbildung mittels in einem Quarzschiffchen befindlichen, festen Halogeniden innerhalb eines erhitzten Quarzrohrs vorgenommen wird.

11. Verfahren nach Anspruch 1, dadurch **gekennzeichnet**, dass als Trägermedium eine Flüssigkeit verwendet wird, in der der Wassergehalt unter 5 Gew.% liegt.

12. Verfahren nach Anspruch 11, dadurch **gekennzeichnet**, dass als Flüssigkeit ein organisches Medium mit einem Wassergehalt unter 2 Gew.% verwendet wird.

13. Verfahren nach Anspruch 11, dadurch **gekennzeichnet**, dass ein niederer Alkohol mit einem Wassergehalt unter 0,5 % eingesetzt wird.

14. Verfahren nach Anspruch 13, dadurch **gekennzeichnet**, dass man Methanol oder Ethanol einsetzt.

15. Verfahren nach einem oder mehreren der vorhergehenden Ansprüche, dadurch **gekennzeichnet**, dass das durch die Kontaktierung mit Wasser gebildete Aluminiumhydroxid von allen organischen Verunreinigungen befreit wird.

16. Verfahren nach Anspruch 15, dadurch **gekennzeichnet**, dass zur Befreiung von den organischen Verunreinigungen mit einem niedrigen Alkohol mehrfach gewaschen und jeweils zentrifugiert wird.

17. Verfahren nach Anspruch 16, dadurch **gekennzeichnet**, dass mit Methanol 5 bis 10 mal nachgewaschen, jeweils zentrifugiert und hiernach getrocknet wird.

18. Verfahren nach Anspruch 1, dadurch **gekennzeichnet**, dass man die Kalzinierung in Stufen durchführt.

19. Verfahren nach Anspruch 18, dadurch **gekennzeichnet**, dass vor dem Kalzinieren bei etwa 60°C ungefähr 10 Stunden getrocknet wird und dass beim Kalzinieren zunächst auf ungefähr 200°C erhitzt und diese Temperatur ungefähr 30 Minuten konstant gehalten wird, daraufhin auf etwa 400°C erhitzt und diese Temperatur ungefähr 30 Minuten konstant gehalten wird, anschliessend auf etwa 1200°C erhitzt und diese Temperatur ungefähr 1,5 Stunden konstant gehalten wird und schliesslich abgekühlt wird.

20. Verfahren nach Anspruch 5, dadurch **gekennzeichnet**, dass die Aluminiumverbindung auf eine Temperatur im Bereich von 80 bis 250°C erhitzt wird.

21. Verfahren nach einem oder mehreren der vorhergehenden Ansprüche, dadurch **gekennzeichnet**, dass Aluminium-butylat einer Temperatur im Bereich von 100 bis 200°C im Sinclair-La Mer-Generator bei Temperaturen von Boiler und Reheater im Bereich von 160 bis 180°C mit getrocknetem Stickstoff bei einem Verhältnis der Strömungsgeschwindigkeit des Stickstoffs durch die Ionisationskammer, die zwei mit pulsierender Hochspannung im Bereich von 5 bis 20 kV beaufschlagte Schweissdrahtelektroden enthält, sowie direkt in den Boiler von (4-8) : 1 in ein monodisperses Aerosol übergeführt, dieses mit niedrigem Alkohol eines Wassergehalts bis zu 0,3 % zu Aluminiumhydroxid hydrolisiert und sodann zur Umwandlung in alpha-$Al_2O_3$-Teilchen kalziniert wird.

22. alpha-Aluminiumoxid-Korundteilchen, herstellbar nach einem oder mehreren der vorhergehenden Ansprüche, dadurch **gekennzeichnet**, dass sie ausschliesslich in Kugelform in einem Bereich von 0,05 bis 0,6 μm vorliegen, wobei in diesem Bereich nur ein Maximum der Teilchengrösse vorliegt.

23. alpha-Aluminiumoxid-Korundteilchen nach Anspruch 22, dadurch **gekennzeichnet**, dass sie eine Teilchengrösse mit einem symmetrischen Maximum bei 0,3 μm aufweisen.

24. Verwendung der Aluminiumoxidteilchen nach Anspruch 22 oder 23 zur Herstellung von Magnetschichten mit verbesserter Abriebsfestigkeit und zur Verbesserung des Signal-Rauschverhältnisses.

**Claims**

1. Method of producing spherical aluminum oxide particles of dense particle size distribution, wherein, starting from a volatile hydrolizable aluminum compound, almost monodisperse aluminum-bearing sol is produced in a carrier gas stream, which is hydrolized to aluminum hydroxide particles and then calcined, characterized in that the sol is produced by an aerosol generator, with the flow rate of the carrier gas(es) and its (their) temperature(s), which control the ratio of the nuclei concentration to that of the aluminum-bearing vapor to be condensed, being adjusted according to the desired particle size of the final product, that the sol is introduced into a hydrolysis medium containing a controlled small quantity of water and in which the sol does not dissolve but forms an emulsion which, as hydrolysis proceeds, is converted into a suspension, and that for calcination, following a step program, the sol is heated to a temperature of between 1000°C and 1200°C, forming alpha-aluminum oxide particles of a uniform spherical shape in submicron particle size of between 0.05 and 2 μm.

2. Method according to claim 1, characterized in that the sol is produced by an aerosol generator in which the ratio of the nuclei concentration to the aluminum-bearing vapor to be condensed is adjusted by controlling the flow rate of the inert gas(es) and its (their) temperature(s) such that the sol after having come into contact with the water, contained in the carrier medium in a controlled small quantity, and subsequent calcination is converted into aluminum oxide particles of a uniform spherical shape in submicron particle size exceeding 0.2 μm.

3. Method according to claim 1 or 2, characterized in that the sol with the water applied is converted into an emulsion.

4. Method according to claim 1, characterized in that the aerosol generator used is a Sinclair-La Mer generator or a falling-film generator.

5. Method according to claim 1 or 2, characterized in that the hydrolizable aluminum compound is aluminum alcoholate $Al(OR)_3$, with R being either methyl, ethyl, propyl, butyl or pentyl.

6. Method according to claim 1, characterized in that the carrier gas used is $N_2$, argon or helium in a dried state.

7. Method according to claim 4, characterized in that the temperature of the Sinclair-La Mer generator in the boiler and the reheater is kept in the range from 1500 to 200°C.

8. Method according to claim 7, characterized in that the temperature in the boiler and the reheater is substantially the same.

9. Method according to claim 7, characterized in that the inert gas stream through the ionization chamber has a four to eight times higher flow rate than that led through or via the hydrolizable aluminum compound.

10. Method according to claim 4, characterized in that the nuclei are formed by means of solid halogenides contained in a quartz boat which is located in a heated quartz tube.

11. Method according to claim 1, characterized in that the carrier medium used is a liquid, the water content of which is less than 5% by weight.

12. Method according to claim 11, characterized in that the liquid is an organic medium, the water content of which is less than 2% by weight.

13. Method according to claim 11, characterized in that a low alcohol with a water content of less than 0.5% is used.

14. Method according to claim 13, characterized in that methanol or ethanol is used.

15. Method according to any one or a combination of the preceding claims, characterized in that the aluminum hydroxide formed by water contact is freed from any organic contaminations.

16. Method according to claim 15, characterized in that for removing the organic contaminations, a low alcohol is repeatedly used for washing and centrifuging.

17. Method according to claim 16, characterized in that methanol is used 5 to 10 times for subsequent washing, centrifuging and drying.

18. Method according to claim 1, characterized in that calcination is carried out in steps.

19. Method according to claim 18, characterized in that prior to calcination, drying is carried out at about 60°C for approximately 10 hours, and that during calcination, heating is initially effected to about 200°C, keeping said temperature constant for about 30 minutes, then to about 400°C, keeping said temperature constant for about 30 minutes, and finally to about 1200°C, keeping said temperature constant for about 1.5 hours, followed by a cooling step.

20. Method according to claim 5, characterized in that the aluminum compound is heated to a temperature ranging from 80 to 250°C.

21. Method according to any one or a combination of the preceding claims, characterized in that the aluminum-butylate of a temperature ranging from 100 to 200°C in the Sinclair-La Mer generator at boiler and reheater temperatures ranging from 160 to 180°C, using dried nitrogen at a ratio of the flow rate of the nitrogen through the ionization chamber, comprising two welding electrodes which are subjected to an intermittent high voltage from 5 to 20 kV, to that of the nitrogen applied straight to the boiler of (4—8) : 1, is converted into monodisperse aerosol, said monodisperse aerosol being hydrolized by means of a low alcohol with a water content of up to 0.3% to aluminum hydroxide and then calcined for conversion into alpha-Al$_2$O$_3$ particles.

22. Alpha-aluminun corundum particles, producible according to any one or a combination of the preceding claims, characterized in that they are exclusively present in a spherical shape in a range from 0.05 to 0.6 μm, with only one maximum of the particle size being obtained in that range.

23. Alpha-aluminum oxide corundum particles according to claim 22, characterized in that they have a particle size with a symmetrical maximum at 0.3 μm.

24. Use of the aluminum oxide particles according to claim 22 or 23 for producing magnetic layers with an improved abrasion resistance and for improving the signal-to-noise ratio.

**Revendications**

1. Procédé de fabrication de particules sphériques d'oxyde d'aluminium a répartition étroite de granulométrie, dans lequel, en partant d'une combinaison d'aluminium hydrolysable volatile, on crée dans un flux de gaz porteur un sol monodispersé contenant de l'aluminium, on hydrolyse celui-ci en particules d'hydroxyde d'aluminium et on le calcine, caractérisé en ce que le sol est constitué par un générateur d'aérosols, la vitesse d'écoulement du ou des gaz porteur(s) et leur température, qui règlent le rapport de concentration des germes et de la vapeur contenant l'aluminium à condenser, étant réglées de façon correspondante à la granulométrie souhaitée du produit final, en ce que le sol est amené dans un milieu hydrolysant qui contient de l'eau en faible proportion contrôlée et dans lequel le sol ne se dissout pas mais constitue une émulsion, qui est ensuite transformée en une suspension lorsque l'hydrolyse se poursuit et en ce que la calcination est réalisée en chauffant entre 1000°C et 1200°C en suivant un programme par étapes, des particules d'aluminium α de forme individuelle sphérique se constituant en granulométrie submicronique entre 0,05 et 2 μm.

2. Procédé selon la revendication 1, caractérisé en ce que le sol est constitué par un générateur d'aérosols dans lequel le rapport de concentration des germes et de la vapeur contenant l'aluminium à condenser est réglé par réglage de la vitesse d'écoulement du ou des gaz(s) inerte(s) et de leur température de telle façon que le sol après être entré en contact avec l'eau, qui est contenue en faible proportion contrôlée dans le milieu porteur, et après avoir été calciné, est transformé en particules d'oxyde d'aluminium de forme individuelle sphérique en granulométrie submicronique supérieure à 0,2 μm.

3. Procédé selon la revendication 1 ou 2, caractérisé en ce que le sol est transformé en une émulsion avec l'eau amenée.

4. Procédé selon la revendication 1 caractérisé en ce que l'on utilise comme générateur d'aréosol un générateur Sinclair-La-Mer ou un générateur à film ruisselant.

5. Procédé selon la revendication 1 ou 2, caractérisé en ce que l'on utilise comme combinaison d'aluminium hydrolysable un alcoolate d'aluminium Al(OR)$_3$ où R est choisi parmi les radicaux méthyle, éthyle, propyle, butyle et pentyle.

6. Procédé selon la revendication 1, caractérisé en ce que l'on utilise comme gaz porteur N$_2$, de l'argon ou de l'hélium à l'état séché.

7. Procédé selon la revendication 4, caractérisé en ce que la température du générateur Sinclair-La-Mer est respectivement maintenue dans la chaudière et dans le réchauffeur dans la zone de 150°C et 200°C.

8. Procédé selon la revendication 7, caractérisé en ce que la température dans la chaudière et le réchauffeur est réglée de façon sensiblement égale.

9. Procédé selon la revendication 7, caractérisé en ce que le flux de gaz inerte est guidé à travers la chambre de ionisation avec une vitesse d'écoulement quatre à huit fois plus élevée qu'à travers ou au-dessus de la combinaison d'aluminium hydrolysable.

10. Procédé selon la revendication 4, caractérisé en ce que la constitution de germes est réalisée dans un tube de quartz chauffé au moyen d'halogénures solides, qui se trouvent dans des nacelles en quartz.

11. Procédé selon la revendication 1, caractérisé en ce que l'on emploie comme gaz porteur un liquide dans lequel la teneur en eau est inférieure à 5%.

12. Procédé selon la revendication 11, caractérisé en ce que l'on emploie comme liquide un milieu organique de teneur en eau inférieure à 2%.

13. Procédé selon la revendication 11, caractérisé en ce que l'on utilise un alcool bas à teneur en eau inférieure à 0,5%.

14. Procédé selon le revendication 13, caractérisé en que l'on utilise du méthanol ou de l'éthanol.

15. Procédé selon une ou plusieurs des revendications précédentes, caractérisé en ce que l'hydroxyde d'aluminium formé par la mise en contact avec l'eau est libéré de toutes impuretés organiques.

16. Procédé selon la revendication 15, caractérisé en ce que pour libérer des impuretés organiques, on lave avec un alcool bas et on centrifuge respectivement plusieurs fois.

17. Procédé selon la revendication 16, caractérisé en ce que l'on lave cinq à dix fois avec du méthanol, que l'on centrifuge chaque fois et que l'on sèche ensuite.

18. Procédé selon la revendication 1, caractérisé en ce que l'on exécute la calcination par étapes.

19. Procédé selon la revendication 18, caractérisé en ce qu'avant de calciner on sèche à environ 60°C pendant environ 10 heures, et que pour calciner on chauffe d'abord à environ 200°C et que l'on maintient cette température constante pendant environ 30 minutes, puis que l'on chauffe à environ 400°C et que l'on maintient cette température constante pendant environ 30 minutes, et que l'on chauffe ensuite à environ 1200°C et que l'on maintient cette température constante pendant environ 1,5 heures, et qu'enfin l'on refroidit.

20. Procédé selon la revendication 5, caractérisé en que la combinaison d'aluminium est chauffée à une température dans la zone de 80°C à 250°C.

21. Procédé selon l'une ou plusieurs des revendications précédentes, caractérisé en ce que l'on transforme en un aérosol monodispersé du butylate d'aluminium à une température dans la zone de 100 à 200°C dans le générateur Sinclair-La-Mer à des températures de chaudière et de réchauffeur dans la zone de 160 à 180°C avec de l'azote séché avec un rapport de vitesses d'écoulement de l'azote à travers la chambre d'ionisation qui contient deux électrodes de cordon de soudure auxquelles est appliquée une tension élevée à impulsions dans la zone de 5 à 20 kV, ainsi que directement dans la chaudière de (4 – 8) : 1 que l'on hydrolyse cet aérosol en hydroxyde d'aluminium à l'aide d'un alcool bas de teneur en eau pouvant atteindre 0,3% et que l'on calcine immédiatement pour le transformer en particules d'$Al_2O_3$-alpha.

22. Particules de corindon d'oxyde d'aluminium alpha, productibles selon l'une ou plusieurs des revendications précédentes caractérisées en ce qu'elles sont exclusivement de forme sphérique dans une zone de 0,05 à 0,6 μm, un seul maximum de la granulométrie étant présent dans cette zone.

23. Particules de corindon d'oxyde d'aluminium alpha selon la revendication 22, caractérisées en ce qu'elles présentent une granulométrie avec un maximum symétrique à 0,3 μm.

24. Emploi des particules d'oxyde d'aluminium selon la revendication 22 ou 23 pour la fabrication de couches magnétiques présentant une résistance à l'abrasion améliorée et pour l'amélioration du rapport signal sur bruit.

FIG.1

FIG.2

# FIG.3